# EUROPEAN PATENT APPLICATION

(11) **EP 1 672 544 A2**
(43) Date of publication of application: **21.06.2006**
(21) Application number: 05111540.0
(22) Date of filing: 01.12.2005
(51) Int. Cl.: G06F 17/30

(54) **Improving text search quality by exploiting organizational information**

(30) Priority: 14.12.2004 EP 04106539
(71) Applicant: International Business Machines Corporation, Armonk, 35 10504 (US)
(72) Inventor: Baader, Andrea, 71034, Böblingen (DE); Baessler, Michael, 72654, Neckartenzlingen (DE); Doerre, Jochen, 71032, Böblingen (DE); Götz, Thilo, 72074, Tübingen (DE); Hamp-Bahnmüller, Thomas, 70563, Stuttgart-Vaihingen (DE); Lang, Alexander, 70176, Stuttgart (DE)
(74) Representative: Klein, Hans-Jörg

(57) **Abstract**

The present invention relates to method and system for electronic Information Retrieval (IR) applied for an electronic search in a given search environment, in which method a predetermined search pool of documents is crawled (110), and retrieved documents are indexed (230) and ordered by a given ranking procedure (250) according to a given ranking criterion comprising search items defined by a searching person. In order to improve electronic retrieval systems for less-linked information sources, where a searched document can be mapped to an element of the organizational structure of an enterprise associated with said environment, the following steps are proposed:
a) at indexing time, mapping (225) a search document to at least one element of the organizational structure of an enterprise associated with said environment,
b) at query time, associating (245) a querying user with at least one element of the organizational structure of said enterprise,
c) comparing the organizational information of the search document and that one of the querying user, and
d) providing a higher rank to retrieved documents, which have a closer organizational relation compared to documents with a less close relation.

## Description

### 1. BACKGROUND OF THE INVENTION

### 1.1. FIELD OF THE INVENTION

The present invention relates to applications of computer technology and in particular to a method and system for electronic Information Retrieval (IR) applied for an electronic search in a given search environment, wherein a searched document can be mapped to an element of the organizational structure of an enterprise associated with said environment, in which method a predetermined search pool of documents is crawled, and retrieved documents are indexed and ordered by a given ranking procedure according to a given ranking criterion comprising search items defined by a searching person.

### 1.2. DESCRIPTION AND DISADVANTAGES OF PRIOR ART

Electronic search using prior art Information Retrieval (IR) systems is increasingly used and well-accepted. Also the amount of electronic data sources, i.e. the globally available search pool is steadily increasing. In consequence, efficient IR systems must handle this vast amount of information sources efficiently, in order to offer acceptable results to the searching person.

An introduction to this general prior art is given in:
(1): "Modern Information Retrieval" - Addison Wesley 1999, or in
(2): "Searching the WEB" - Stanford University, published in ACM Transactions on Internet Technology (TOIT) archive, Volume 1, Issue 1 (August 2001) table of contents, Pages: 2 - 43, Year of Publication: 2001, ISSN:1533-5399

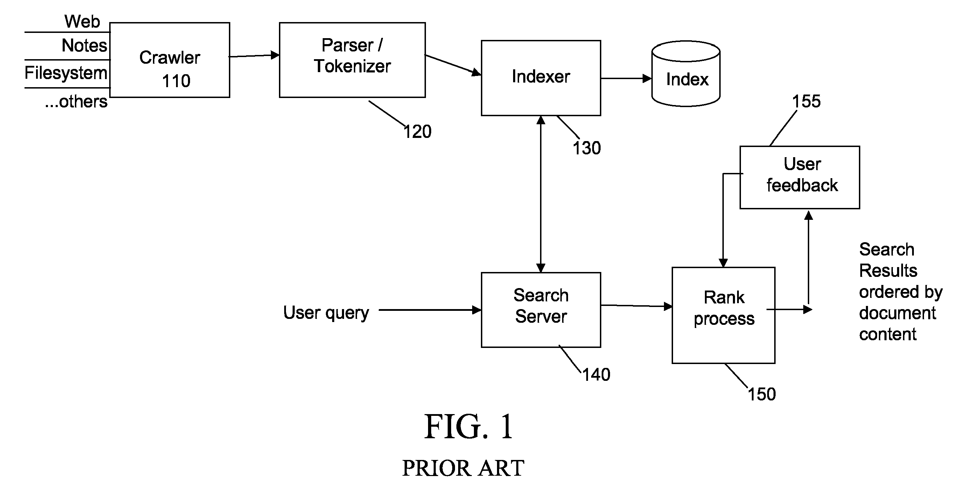

A sample prior art IR system according to (2) above is depicted in figure 1. The main task of such an IR system is to make the data from the search pool available and accessible for user queries. Therefore different processing steps are necessary. First of all, the Crawler 110 process gathers documents from the search pool. The output of the Crawler is some binary content extracted and copied into a staging area accessible for further processing.

The Parser 120 takes a binary crawled document from the staging area and first separates the text data from markup information. For example HTML documents have markup information like "<html>" or "<body>", which are deleted from the text data stream.
After that the text data stream only includes real text and no formatting or meta information about the document.

The Tokenizer 120 divides the text data stream in distinct words, sentences and paragraphs. For this processing step it is necessary to get the language of a document which is also analyzed within the Parser, because it also involves finding base forms (e.g. "mouse" for "mice") of words. The input document is now separated in its lexical units called tokens.

Therefore after the Parser/Tokenizer 120 has stored the documents from the search pool as a stream of tokens in a staging area they can be processed by the Indexer 130. The Indexer first creates an inverted index of the token stream. This stream of documents is sorted by the positions of the tokens in the document and by the documents itself. The Indexer inverts this representation, which means the output of the Indexer is a list of tokens with its occurrences in the different documents and its positions in the document text. Similar to an index in a book the inverted index allows to look up in which document a specific query item exists. Not only the simple occurrence but also the number of occurrences can be extracted from the inverted index. This information is necessary to calculate relevance scoring like the tf*idf method described below.

The search server 140 provides the search functionality for the user. It takes the user query and retrieves the relevant documents from the precalculated inverted index. Finally the rank process 150 is responsible for the order of the search results. The goal is to have the most relevant documents for a specific query on top of the list. Therefore the relevance scoring and the documents centric are used to determine the order of the result list. Additionally in some cases user feedback 155 is also used within the ranking. This process records documents for a query which have been accessed from the result list and boost their rank next time when the same query is posed.

It should be noted that the invention also applies to IR systems that do not include all of the above parts. The invention does not rely on a specific output of any of the components described in figure 1.

Prior art full-text search engines applied in the Internet compute search results of relative high quality in terms of high relevancy of the results to the query, by employing information about the popularity of web pages drawn from an analysis of the link structure of web pages, see for example the Google ranking. By this link-based ranking a user often finds what he is actually looking for, in particular, when the search query is not too much exceptional in nature.

A very frequently used search pool however is constituted by documents hosted within a private or public Intranet, for example an enterprises Intranet. In contrary to the before-mentioned search pool the search applications operate on a far smaller scale in smaller domains and, in general, in domains, which are by far less linked.

Such less linked information sources are for example various databases of different scope, content management systems or mail systems, news systems or file systems or respective subsets thereof, all belonging to a given enterprise. Those systems typically suffer from the problem that link analysis is not very useful for determining a high popularity of a given search document and hence, they do not yield highly relevant results at one of the top ranking positions.

Other prior art non-link related ranking methods include vocabulary-oriented methods like tf*idf relevance scoring.
This relevance scoring is based on the two parts tf (term frequency) and idf (inverse document frequency). Tf is the frequency of a term t in a document d. Idf refers to the occurrence of the term t in the whole search pool. Therefore idf is high, when a specific term only appears in a few documents, see for example "Baeza-Yates, R. & Ribeiro-Neto, B. (1999):
Modern Information Retrieval, p. 29ff, New York: ACM
Press/Addison-Wesley". Thus the relevance scoring of a document for a specific term is high, when the term t appears many times in the specific document but rarely in other documents of the search pool.

Unfortunately, these methods alone do not provide a sufficient ranking quality.
Additionally, in general prior art there is some mentioning of so-called out-of-corpus information for ranking in the area of taxonomies and ontologies. According to this prior art it may be helpful for ranking to include the domain knowledge captured in the taxonomies. But in many cases the domain knowledge is by far too special for general searches or simply is not available.

Thus, in summary said less-linked domains, when searched can not be searched and the results thereof can not yet be ranked in a satisfying way.

### 1.3. OBJECTIVES OF THE INVENTION

It is thus an objective of the present invention to improve electronic retrieval systems for less-linked information sources.

### 2. SUMMARY AND ADVANTAGES OF THE INVENTION

This objective of the invention is achieved by the features stated in enclosed independent claims. Further advantageous arrangements and embodiments of the invention are set forth in the respective subclaims. Reference should now be made to the appended claims.

A search pool may comprise multiple databases of different scope, news letter agglomerations, literature collections, technical bulletins, patent databases, web pages, etc.

The very core idea of the present invention includes to make use of the fact that when people search documents within large organisations they are typically more interested in documents from units in the enterprise to which they have some organisational relation. For example, a person in software sales may be interested in documents about sales information, human resources, infrastructure or high level technical software information. But the person is less likely expected to be interested in detailed hardware information or in detailed financial controlling information or in laboratory information dedicated for locations, which are situated far away from the office of the searching person. Thus, today, the most important example for less-linked domains are Intranets belonging to any given enterprise, or authorities, etc. Consequently, one of the main aspect of the present invention includes to define a notion of "organisational closeness", which is intended to capture, to which degree two different units within an organisation (for example an enterprise) are interrelated. Then, at indexing time each document is associated with one or more organisational units or elements thereof. Later, at query time the person entering the query is also associated to one or more organisational units. Then, an inventional factor of "organisational distance" is used to influence the ranking in search: documents, which are "closer" to the searching person, are ranked higher.

In addition to the before-mentioned criterion of "organisational closeness" also other sources of organisational information can be exploited advantageously for the ranking procedure. One key information which is available about a considerable proportion of search documents at least in enterprises Intranets is the authorship of a document. This can be determined by observing respective tags, access rights to said documents, etc. Authors can be located in a graph-like representation of the enterprise organisational structure, i.e., an organigram, and can be associated with the organisational units (elements) they belong to. This may advantageously be used to determine the position and seniority of authors, which then can be used as a clue to rank documents from these authors higher.

Further advantageously, many enterprises operate expertise databases e.g. staff databases storing expertise, additional skills and even hobbies or special interests of a person. According to the invention, if such information is available about the author of a document, this may be used to specifically rank documents higher when an author has written it in one of his or her expertise areas. In this respect, it should be noted that the author does not necessarily need to be a natural person, but can be an institutional person as well, for example a department, a separate company or a research institute. This may be helpful in cases, where information about the seniority and the quality of the institution is available but is not available for the individual author.

The inventional method and system improves the search results specifically, when applied for search pools in closed enterprises Intranets. The inventional method is not dependent of link information but instead only on information that is readily available in most enterprises, for example via the prior art LDAP or Active Directory system. It works with any data source. The inventional method is computationally simple and efficient. This is required especially for query time, where fast response times are important. Further, the inventional ranking procedure can be combined with other ranking hints in a weighted fashion to optimise overall ranking quality.

With respect to the claim wording in the present invention an electronic Information Retrieval (IR) method is disclosed, which is applied for an electronic search in a given search environment, and in which method a predetermined search pool - for instance multiple databases of different scope, news letter agglomerations, literature collections, technical bulletins, patent databases, web pages, etc. - of documents is crawled, and retrieved documents are indexed and ordered by a given ranking procedure according to a given ranking criterion comprising search items defined by a searching person. The inventional part of this method is characterized by the steps of:
a) at indexing time, mapping (310, 320, 330, 340, 345, 348) a search document to at least one element of the organizational structure of an enterprise associated with said environment,
b) at query time, associating (355) a querying user with at least one element of the organizational structure of said enterprise,
c) comparing (372A) the organizational information of the search document and that one of the querying user, and
d) providing (372B) a higher rank to retrieved documents, which have a closer organizational relation compared to documents with a less close relation.

In other words, the inventional method extends the ranking procedure by adding organizational information associated with the searching person/business unit to the ranking criterion - for example the closer or less close neighborhood in an organigram tree, where the searching person/business unit is located in.

The inventional method is applicable when a searched document can be mapped to an element of the organizational structure of an enterprise associated with said environment.

Further advantageously, when the search environment is an enterprise's Intranet, then for example the LDAP or Active Directory-based information about the organigram structure of said enterprise is used as information source for assessing organizational closeness between the searching person and the retrieved documents, wherein the organigram is mapped to a weighted graph, in which different organizational units are represented by respective different nodes, and the weighted distance between a home-node of the searching person, i.e., the most specific unit, the person is related to, and a "home"-node of a respective searched document is used as a measure for closeness. The home-node of the document is in most cases a particular node in the "organizational graph", which is assessed as most significant in a compare of the search item and the underlying technical meta information of the document stored during indexing time, see steps 310, 320 later below.

Further, in an advantageous variation of the inventional method, an attribute describing the degree of association between a searched document and multiple different organizational units is used for classifying the document, in a case a search item has multiple semantic meanings. For instance the meanings of "bus" include a software bus, a hardware bus, and an autobus. Thus, the retrieved documents can be grouped according to their technical area.

Further, the searching person can be associated with one or multiple predetermined organigram elements by way of manual configuration.

This is a feature which opens up the possibility of high flexibility for different uses, as the searching person is not required to be member of the original organigram.

Further advantageously, the inventional method can be extended to encompass not only the searching person, but also the author or organization who created or published, respectively, the document. In this case, the expertise of the author or organization, which may be determined, for instance, by manual configuration or extraction of the skills from expertise databases, also influences the document ranking.

### 3. BRIEF DESCRIPTION OF THE DRAWINGS

The present invention is illustrated by way of example and is not limited by the shape of the figures of the drawings in which:
Figure 1 is a schematic diagram illustrating a prior art information retrieval system;
Figure 2A is a schematic diagram illustrating a system improved by the present invention;
Figure 2B is a zoom-view on component 225 in figure 2A, for illustrating the required interfaces to diverse information sources;
Figure 3A is a schematic diagram illustrating the control flow in a preferred embodiment of the inventional method during indexing time;
Figure 3B is a schematic diagram illustrating the control flow of the inventional method according to a preferred embodiment thereof during query time;
Figure 4 is a schematic diagram illustrating the basic concept of the present invention by setting into a single context an enterprises organisational organigram hierarchy (left), a querying user (top), a prior art ranked list of searched documents (left column), an improved ranked list according to the invention (right column) and an author of the document having the highest rank in the right column ranking list.

### 4. DETAILED DESCRIPTION OF THE PREFERRED EMBODIMENT

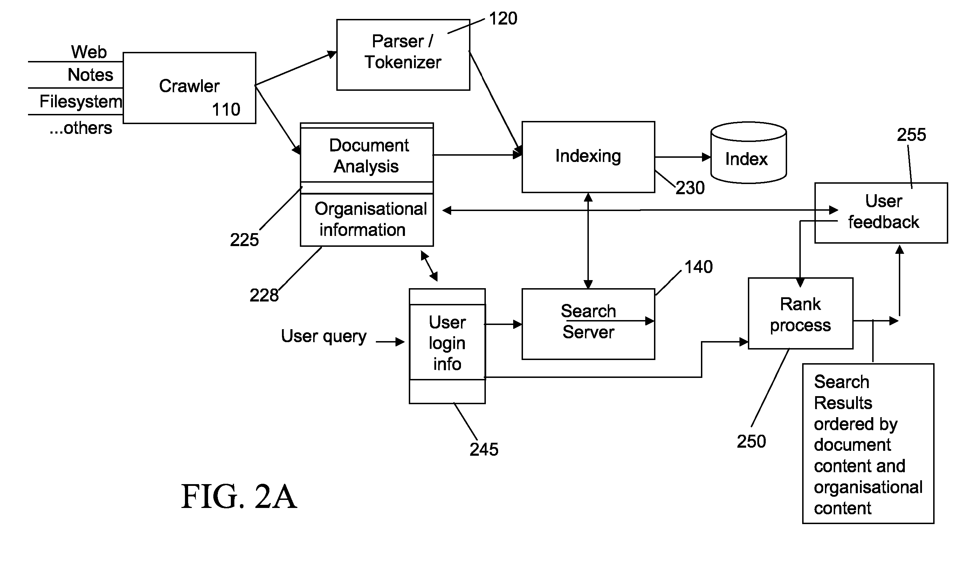

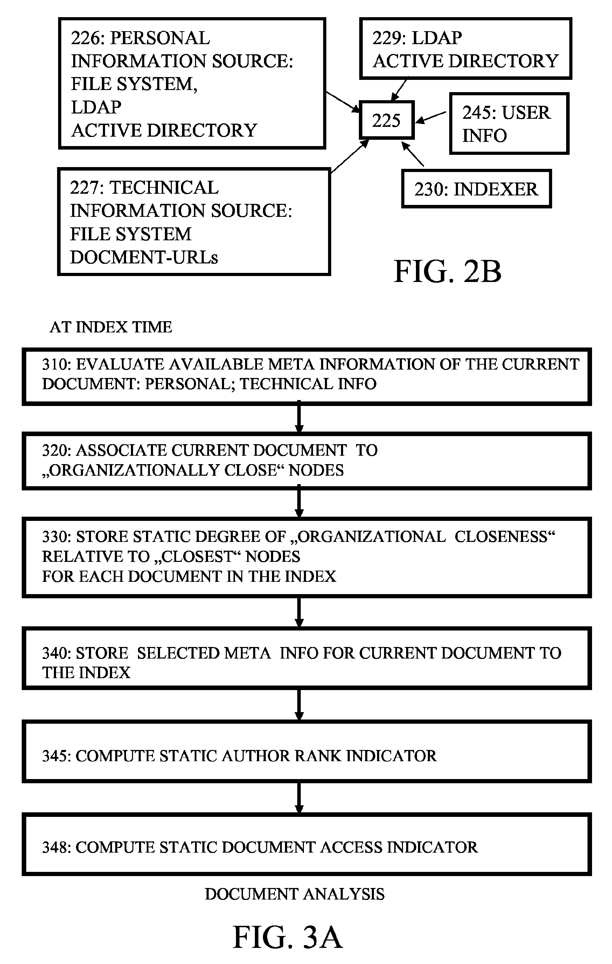

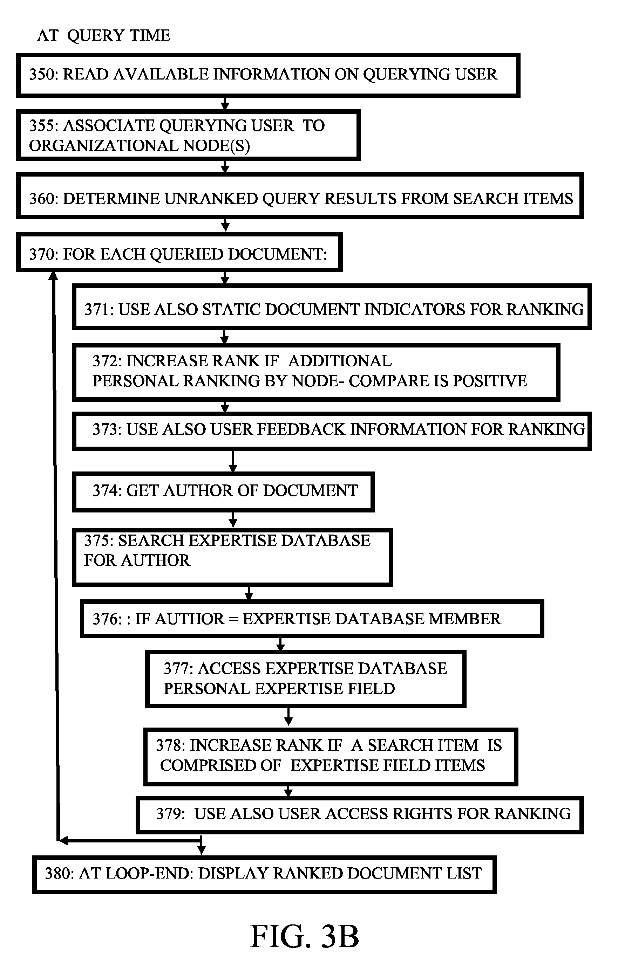

With general reference to the figures and with special reference now to figure 2A, 2B and 3 the inventional components and processes of the system according to a preferred embodiment of the invention will be described. Where not explicitly described, the description of figure 1 can be included for understanding figure 2A.

An inventional component is the Document Analysis component 225 implementing a process 225 which will be executed parallel to the Parser/Tokenizer 120 procedure. Within this process 225 the organizational information 228 provided by the enterprise in a machine readable fashion (e.g. via LDAP) - for instance the "IBM BluePages" and the user feedback information used in step 373, is used to generate additional meta information for every document. This meta information includes some static indicators like closeness rank indicator, see step 320, author rank indicator, see step 345, document access indicator, see step 348 and some other author or organizational information from step 310, which are additionally stored in the index by the Indexer 230.

Figure 2B depicts details of the analysis component 225 as follows:
An interface to an enterprise-specific personal information source 226, as for example the file system, is provided. The networked file system comprises personal information related to a searched document, as for example authorship and access rights of a document. It can be accessed by operating system calls. Further personal information sources 226 are the before-mentioned LDAP or Active Directory systems.

Further, an interface to technical information sources 227 of a searched document is provided. These sources 227 include again the file system and the physical location of a document, which is often derivable fron the document's URL.

These interfaces serve to evaluate - see step 310 later below - personal or technical meta information which is significant for the content of a searched document.

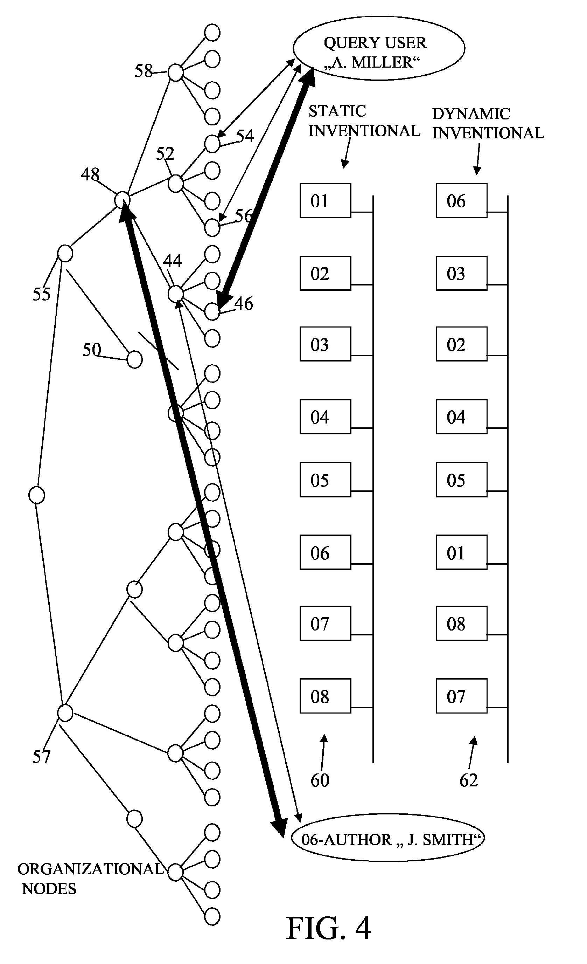

Further, an interface to an enterprise-specific information source 229 is provided for associating -see step 320 later below - the document to one or more nodes in the organizational graph, see figure 4. Again, LDAP or Active Directory can be used for this purpose, as those systems are already used very often and manage the required information, as for examples the descriptive names of the organizational units, and the tree structure including distances between particular nodes.

Further, an interface to the indexing component 230 mentioned above is provided for storing - see the step 330 later below - a query-user-independent, herein referred to as "static", degree of organizational closeness in an index entry of a searched document. A respective API is defined in order to create an extended index including the meta information collected as described above or including weighting information for given search items.

Finally, an interface is provided to a user information source 245 for comparing - see the step 372A later below - the organizational information of the search document and that one of the querying user. This source may be a staff information management system and can be looked up via matching the login items "user name" and "password".

With reference back to Figure 2A the organisational information 228 provided by the enterprise is also used by other processes such like the user login information process 245 or the user feedback process 255.
The user login information process 245 uses the organisational information 228 to extract the available user information, see step 350, and to associate the user with one or more nodes in the organisational graph, see step 355. This information is provided and additionally used by the rank process 250 for ranking the documents.

The user feedback process 255 provides additional meta information depending on the organisational information about documents which have been accessed for a query 373.

The rank process 250 also uses all additionally available information like static rank indicators, see step 371, author organisational information, see step 378, user closeness information, see step 372, user feedback information, see step 373 and user access rights, see step 379, to rank the query results. So the ranked search result is ordered by document content and organisational content.

With further reference now to figures 3A, 3B and figure 4 a preferred embodiment of the inventional method will be described in a search environment offering a plurality of information sources, which set up a respective search pool for the information retrieval method. The information sources can be electronically accessed by the enterprises Intranet.

As a preparatory work an organisational tree of the enterprise organisation is provided via LDAP or Active Directory. This organisational tree is exemplarily depicted in figure 4, left portion. The nodes depicted in the tree are different business units, like workgroups, departments, or other hierarchy level structure elements. The enterprises organigram structure may be exemplarily assumed to include a node 57 being the parent tree for any economic questions, a node 55 being the parent node for all technical questions. Further, node 48 subtree is responsible for software, node 50 for hardware.

With particular reference to figure 3A the inventional method workflow is described in more detail during its indexing time.

Basically, documents from the different information sources are collected by a document crawling procedure as it is known from prior art. This results in a collection of searched documents which are subjected to a number of steps provided by the present invention. These steps are as follows:

In a first step 310 any available meta information of a searched document is evaluated. This meta information e.g. comprises basically personal information related to the searched documents owner ship or its author ship and access rights granted to a given searched document. Technical meta information of a document is also evaluated. Here, the physical location of the document which can be inferred from an URL can be taken into account, or the name or dedication of a database may be considered. Assume a case, in which an important search item is "bus". This search item has multiple meanings in the technical area. First, a vehicle is known, but may be rejected for being attributed with a major relevance in a case, in which the enterprises technical field is delimited to computer technology, which shall be assumed in this example. In software technology however, hardware buses and software buses exist. In the static part of ranking there will be no distinction between the different meanings of "bus". However, if somebody from a software organisational unit searches for documents about "bus", then documents that reside on databases that are located within the software organisation are ranked higher than documents from databases that are located within the hardware department or within another organisation. If an organizational unit exists covering those software-related buses, then this node will be assessed as "home-node" of the document. In absence of such specialized node the next higher-level node will be taken as "home node" of the document.

A further technical meta information, namely the user feedback information from step 373 may be constituted by certain usage information, which is sometimes recorded when people from respective business units have accessed a given, searched document, see Figure 2 - block 255. If for example a current document has been accessed very often by people belonging to the software development department of the enterprise, the document will be associated with those nodes of the organisational tree, which belong to this particular business area. This may include the association with a single node or an association with a plurality of nodes, for example a subtree splitting up in a plurality of further sub trees. If a search item is very specialised, then a more precise association may be accomplished, for example the association shown in figure 4, where node 46 represents the development of software buses.

Further, also the institution that has published the document may be evaluated in cases in which a significant coincidence between the search item and the working area of this institution can be surely fixed.

In a next step 320 the current search document is associated to one or more of those nodes, which may be considered to show a certain "organisational closeness" to the search item.

In this respect the nodes 44, 48, 52 and 58 are associated with the attribute "close" for the searched document. More particularly, an optional further distinction can be made by giving a higher rank -like "very close" - to node 46 itself, which is considered as the home-node of the document, as well as to node 44 as this is the direct parent node of node 46.

This degree of "static closeness rank" can be implemented by using prior art computing algorithms as for example weighting factors.

Further in step 330, preferentially this rank representing the closeness information is stored within the index representation of the document in order to be able to quickly access this document at later query time, described later below in more detail.

In a next step 340 the meta information evaluated in step 310 is stored with the document to the index, in order to retrieve it later during query time.

It should be added that the meta information belonging to a searched document may include far more details than mentioned above, for example:

It may include personal expertise data of the author, or expertise data of the organization (which may be both internal and external to the enterprise) that published the document. If the author is member of the enterprise within which the search is performed, expertise data stored and managed in an expertise database typically includes concise, short information about the skills of an author, about the focus of the working area an author is occupied with, further, about personal interests and may be hobbies.
Moreover, publicly available information can be used to weigh the personal expertise of the author. For example, members of interest groups of organizations deemed trustworthy (for example, the SIGCHI group of the ACM) can be associated with the topics of the interest group. This information can be accessed, for example, via the Internet presence of the respective organization. This information can then also be stored within the expertise database even though the people and organisations may not be part of the enterprise. According to the present invention this typical coincidence between the conciseness of such expertise-related data and the conciseness typically used by defining some search items is exploited within the present invention.

Further in step 345, at indexing time and independent of any query definition a static author rank indicator can be used to describe a relevance score between the document and the author/organization. By using the degree of the authors job responsibility, the quantity of publications, the importance of the author/organization or any other personal information can be used to boost the static author rank indicator. Also the author's working area, the before-mentioned personal expertise or other author information used within the enterprise in respect to the document or document category can have an impact to the static rank indicator. For example a system architect who writes document is ranked higher than a developer who performs the work defined by this architect. Or, an author with high expertise in XML will be ranked higher than an author with less expertise in XML. This of cause concerns only documents having a significant relationship to XML.

With reference to above technical meta information of a searched document also a static document access indicator can be computed - step 348. For this purpose, the security/accessibility information of the document can be used to boost this indicator, if desired. Further, the number of members of user groups which are associated with the searched document can be evaluated. The higher the number, the higher will the document be ranked. This meta information can be obtained from observing so-called access control lists (ACL), which are available for a system manager. Specifically, this information can be used to rank a document from a more specific group having less members higher, if the query is issued by a member of this group - step 379. For example, if a manager issues a query, documents with manager-only permission are ranked higher than "public" documents.

Further, the number of documents which are available for a certain group or for a certain security token can be advantageously evaluated. This information can be computed when the document is crawled and may be possibly combined with information from the before-mentioned LDAP system. Depending on the actual scenario, a document that doesn't have many "peers" with the same ACL but, most likely, different content may be ranked differently compared to a document that has many such "peers".

The location where the author information can be retrieved is in most cases dependent on the searched system. For example in a conventional relational database system the auditing system may be used to track the author information. In a Content Management (CM) system the author information is very often supported and stored in a dedicated data field together with a document. Further, when a document is sent via the http, then a respective field is often used for storing personal meta information for the owner or the author of a html document. Further, additional meta-info fields like audience field or distribution fields can also be used. Further, in many enterprises communication systems like Lotus Domino or Microsoft Exchange the so-called team-rooms set up a logical unit where documents are stored together with a document creator ID and a modified-by ID. Further of course, the "from" field of email systems can also be exploited in the above sense.

So, in the end of the document analysis step 225 all selected meta information and computed indicators are stored in any appropriate way together with a searched document. The link between meta information and a searched document may be implemented for example by using the same data set or by a pointer from the document ID to the storage location of the stored meta information. Of course, further implementations as known in prior art can be used.

With further reference now to figure 3B the essential steps in a control flow of the inventional method applied in a preferred embodiment at query time are described in more detail next below. Suppose, a staff member of the enterprise, the Intranet of which has been searched and indexed as described before with reference to figure 3A, issues a query.

At query time, see also block 245 in figure 2 for reference, in a first step 350 any personal information related to the querying user is read from the querying system. Basic personal information for example is the name of the user, its user ID, different workgroup names or project names, the user is member of, name of his manager, user access rights, etc. This additional information beyond the name and user ID can be retrieved from above-mentioned expertise database. Then, in a next step 355 the querying user is associated to one or more organisational nodes depicted in figure 4 on the left side. In the situation depicted in figure 4 a querying user A. Miller is primarily associated with node 46 and has further minor associations with nodes 54 and 56 as these nodes represent organisational units under which further two projects are presently performed, in which the querying user takes part. This node association is stored in temporary query fields along with the query data. Similarly, respective data fields are provided within the query system.

In a next step 360 the query result documents are determined by evaluating the search items of the current search of user A. Miller. This follows prior art procedures. The result is an unranked document list which is not yet exposed to the querying user.

Then in loop 370 a sequence of steps will be performed within which inventional features are advantageously exploited.

Thus, loop 370 is run through for each queried document in order to provide each document with an improved rank. In a first step 372 the organisational nodes stored in above-step 320 at indexing time and determined in step 355 at query time are compared, step 372 A. A document will be ranked the higher, the more close both nodes are within the tree, step 372 B. The distance for example can easily be determined by counting the edges between the nodes, possibly enriched by weighting the edges with appropriate weights.
In the example depicted in figure 4 the author "J. Smith" of document no. 6 is associated by the inventional method to node 48. J. Smith may be assumed to be a senior manager and responsible for any software developed or used within the given enterprise. Assuming that a senior manager has acquired profound knowledge and capabilities due to his relatively long career and due to the fact, that J. Smith is the manager of node 44 which directly manages the business unit 46, a direct technical and business relationship is present between nodes 46 and 48. Thus, document 06 is ranked very high according to the inventional method.

Then in a next step 374 an additional and optional ranking improvement will be performed which includes the personal expertise field in the expertise database. This database does not only include information about the employees within the enterprise but may also include information about people and organisations that are not part of the enterprise. This works as follows:
In a step 374 the author of the current document is determined.
In a step 375 the expertise database is looked up in order to determine if information is found about the author or about the publishing organisation. In case no information is found the loop will be left. Otherwise, the author is treated which is determined in a step 376.
Then, the expertise database is accessed and the personal data stored in the expertise field of this author is picked out.

In a following step 378 the search items are compared to the items stored in the expertise field. If a coincidence is present, then the rank of the document is further increased. The coincidence may be assessed as present when the items are identical. Further, a list of synonyms can be looked up in order to increase the probability for integrating items having the same meaning. Also technical items thesauri can be used in order to state a relatively high similarity between two items in cases in which one of both items represents a general item and the other a more specific item and both items are inter-correlated within the technical thesaurus in a direct-tree relationship. Thus, the loop 370 is run through which provides for the whole set of documents in the query result list that the result set is ordered in such a way that documents are shown first which have a per se high static closeness rank for one or more of the organisational nodes the querying user is associated with, and concurrently wherein the author of the document stands in a close relationship to the querying user. In figure 4 the static ranking list obtained by exploiting the personal data described with reference to figure 3A above is depicted with symbolic document list 60. The reordered list 62 depicted right in figure 4 is then obtained by performing the dynamic inventional ranking procedure enriched by including both of, the author ship of a ranked document, and the personal data of the querying user. Then, in a step 380 this improved ranking list is displayed to the querying user.

It should be noted that the sequence of steps in figure 3B can further be enriched by additional ranking contributions provided by any of the ranking criteria be that personal or technical in nature, which were described above with reference to figure 3A. Thus, see step 371, the static author rank indicator, the static closeness rank indicator and the access rank indicator of a searched document will be included. Further, see step 379, the querying user access rights to a document to be ranked may be compared with the access rights for the searched document. By that, it can be achieved that a given document which is preserved to be accessed by managers of a predetermined hierarchy level in the enterprise is higher ranked, if this document is queried by a manager, which is at least on this hierarchy level.

Figure 4 further illustrates different particular aspects as follows:
Document 06 is for example also mapped to node 57 this node is located within the economical and not the technical part of the enterprises organisational tree structure. Thus, a different query specifying also economic aspects are also considered in the static ranking as described before with reference to figure 3A. In consequence, document 06 would also be ranked quite high in the dynamic part of the inventional method.

Further, the document 06 is also mapped to node 44 which belongs to the business unit which is the direct parent node to the query user A. Miller's home node 46. In the inventional ranking procedure this results in a further increased ranking quote.

The present invention can be realized in hardware, software, or a combination of hardware and software. An information retrieval tool according to the present invention can be realized in a centralized fashion in one computer system or in a distributed fashion where different elements are spread across several interconnected computer systems. Any kind of computer system or other apparatus adapted for carrying out the methods described herein is suited. A typical combination of hardware and software could be a general purpose computer system with a computer program that, when being loaded and executed, controls the computer system such that it carries out the methods described herein.

The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following
a) conversion to another language, code or notation;
b) reproduction in a different material form.

## Claims

1. An electronic Information Retrieval (IR) method applied for an electronic document search in a given search environment, in which search a predetermined search pool of documents is crawled (110), and retrieved documents are indexed (130) and ordered by a given ranking procedure (150) according to a given ranking criterion comprising search items defined by a searching person,
**characterized by** the steps of:
a) at indexing time, mapping (310, 320, 330, 340, 345, 348) a search document to at least one element of the organizational structure of an enterprise associated with said environment,
b) at query time, associating (355) a querying user with at least one element of the organizational structure of said enterprise,
c) comparing (372A) the organizational information of the search document and that one of the querying user, and
d) providing (372B) a higher rank to retrieved documents, which have a closer organizational relation compared to documents with a less close relation.

2. The method according to claim 1, in which said search environment comprises essentially an Intranet of an enterprise.

3. The method according to claim 1, wherein said mapping step at indexing time comprises the steps of:
a) evaluating (310) meta information of said searched document being significant for the content of the document,
b) associating (320) the document to one or more nodes in said graph,
c) storing (330) a query-user-independent degree of organizational closeness in an index entry of said searched document.

4. The method according to claim 1, in which the organizational structure is mapped to a weighted graph, in which different organizational units are represented by respective different nodes (44-58), and the weighted distance between a home-node (46) of the searching person to nodes (44, 46, 48, 52, 58) of said searched document represented in said graph is used as a measure for closeness.

5. The method according to claim 1, in which LDAP-based information about the organigram structure of said enterprise is used as information source for assessing organizational closeness between the searching person and the retrieved documents.

6. The method according to claim 1, in which Active-Directory-based information about the organigram structure of said enterprise is used as information source for assessing organizational closeness between the searching person and the retrieved documents.

7. The method according to claim 1, in which the authorship of a document is determined, and personal information about personal expertise of said author, stored in and read from a expertise-related database, is used as information source for assessing organizational closeness between the searching person and the retrieved documents.

8. The method according to claim 1, wherein the degree of closeness between a searched document and multiple different organizational units is used for classifying the document in a case where a search item has multiple semantic meanings.

9. The method according to claim 1, wherein the degree of closeness between a searched document and multiple different organizational units is used for refining the user query in a case where a search item has multiple semantic meanings.

10. The method according to claim 1, wherein the searching person is associated with one or multiple predetermined organigram element by way of manual configuration.

11. An electronic Information Retrieval (IR) system applied for an electronic document search in a given search environment, in which search a predetermined search pool of documents is crawled, and retrieved documents are indexed and ordered by a given ranking procedure according to a given ranking criterion comprising search items defined by a searching person,
**characterized by**:
document analysis means (225) having
a) an interface to an enterprise-specific information source (226, 227) for evaluating (310) personal or technical meta information being significant for the content of the document,
b) an interface to an enterprise-specific information source (229) for associating (320) the document to one or more nodes in said graph,
c) an interface to an indexing component (230) for storing (330) a query-user-independent degree of organizational closeness in an index entry of said searched document, and
d) an interface to a user information source (245) for comparing (372A) the organizational information of the search document and that one of the querying user.

12. A computer program for execution in an electronic Information Retrieval (IR) system applied for an electronic document search in a given search environment, in which search a predetermined search pool of documents is crawled, and retrieved documents are indexed and ordered by a given ranking procedure according to a given ranking criterion comprising search items defined by a searching person, **characterized by** a functional component performing the steps of:
a) at indexing time, mapping (310, 320, 330, 340, 345, 348) a search document to at least one element of the organizational structure of an enterprise associated with said environment,
b) at query time, associating (355) a querying user with at least one element of the organizational structure of said enterprise,
c) comparing (372A) the organizational information of the search document and that one of the querying user, and
d) providing (372B) a higher rank to retrieved documents, which have a closer organizational relation compared to documents with a less close relation.

13. A computer program product stored on a computer usable medium comprising computer readable program means for execution in an electronic Information Retrieval (IR) system applied for an electronic search in a given search environment, wherein a searched document can be mapped to an element of the organizational structure of an enterprise associated with said environment, in which search a predetermined search pool of documents is crawled, and retrieved documents are indexed and ordered by a given ranking procedure according to a given ranking criterion comprising search items defined by a searching person, **characterized by** a functional component performing the steps of:
a) at indexing time, mapping (310, 320, 330, 340, 345, 348) a search document to at least one element of the organizational structure of an enterprise associated with said environment,
b) at query time, associating (355) a querying user with at least one element of the organizational structure of said enterprise,
c) comparing (372A) the organizational information of the search document and that one of the querying user, and
d) providing (372B) a higher rank to retrieved documents, which have a closer organizational relation compared to documents with a less close relation.
